# EUROPÄISCHE PATENTSCHRIFT

(11) **EP 2 722 687 B1**
(45) Veröffentlichungstag und Bekanntmachung des Hinweises auf die Patenterteilung: **29.04.2015**
(21) Anmeldenummer: 12189437.2
(22) Anmeldetag: 22.10.2012
(51) Int. Cl.: G01S 17/93, G01S 17/02, G05D 1/00

(54) **Sicherheitsvorrichtung für ein Fahrzeug**
Safety device for a vehicle
Dispositif de sécurité pour un véhicule

(43) Veröffentlichungstag der Anmeldung: 23.04.2014
(73) Patentinhaber: SICK AG, 79183 Waldkirch (DE)
(72) Erfinder: Erb, Frank, 76137 Karlsruhe (DE)
(74) Vertreter: Hehl, Ulrich

(56) Entgegenhaltungen:
- EP-A1- 2 428 862
- EP-A2- 1 788 467
- DE-U1-202005 004 466
- GB-A- 2 413 449

## Beschreibung

Die Erfindung betrifft eine Sicherheitsvorrichtung für ein Fahrzeug mit mindestens einem optoelektronischen Sensor und ein Verfahren zur Absicherung eines Fahrzeugs nach dem Oberbegriff von Anspruch 1 beziehungsweise 13.

Optoelektronische Sensoren werden seit längerem als Fahrer-Assistenzsysteme oder zur automatischen Navigation von Fahrzeugen eingesetzt. Da eine wichtige Funktion darin besteht, Hindernisse zu erkennen, sind derartige Sensoren meist zur Abstandsbestimmung ausgelegt. Hierzu sind verschiedene Verfahren bekannt, beispielsweise stereoskopische Kamerasysteme. Ein weiterer abstandsmessender Sensortyp ist ein Laserscanner, der kurze Lichtpulse aussendet und die Lichtlaufzeit bis zum Empfang von Reflexionen der Objekte im Sichtfeld misst. Der Scanstrahl wird über einen Winkelbereich periodisch abgelenkt, so dass in dem Überwachungsbereich durch Abstand und Winkel erkannter Objekte die Objektverteilung in der Scanebene gewonnen wird.

In der Sicherheitstechnik besteht die Anwendung derartiger Sensoren darin, unzulässige Eingriffe in Schutzfelder zu erkennen und daraufhin ein sicherheitsgerichtetes Abschaltsignal zu erzeugen. Wenn also vor dem Fahrzeug innerhalb des Schutzfeldes eine Person auftaucht, so wird das Fahrzeug abgebremst, um einen Unfall zu vermeiden.

Im Markt für fahrerlose Transportsysteme im Logistikbereich zeigt sich ein Trend, die Fahrzeuggeschwindigkeiten zu erhöhen, um zur Kostenreduktion den Durchsatz je Fahrzeug zu erhöhen und zum Hauptkonkurrenten aufzuschließen, dem bemannten Stapler. Außerdem werden holonome Antriebe entwickelt und eingesetzt, die eine praktisch uneingeschränkte Bewegung in allen drei Freiheitsgraden ermöglichen und Vorhersagen der Bewegung des Fahrzeugs noch weiter erschweren. Beide Aspekte erhöhen noch die Herausforderungen an eine zuverlässige Absicherung.

Würde man beispielsweise ein situationsunabhängiges statisches Schutzfeld um das Fahrzeug legen, das sämtliche denkbaren Geschwindigkeiten und Fahrwege abdeckt, so wäre es mit so großen Sicherheitsaufschlägen zu planen, dass es ständig zu an sich unnötigen Notbremsungen kommt. Um eine ausreichende Verfügbarkeit zu erhalten, ist deshalb bekannt, situationsbedingt ein passendes in dem Sensor vorkonfiguriert abgelegtes Schutzfeld durch Ausnutzung entsprechender Eingänge des Sensors auszuwählen. Eine Absicherung eines Fahrzeugs insbesondere mit der genannten höheren Fahrzeuggeschwindigkeit oder einem holonomen Antrieb wäre aber durch statische Felder allenfalls mit einer großen Anzahl von jeweils einzeln zu konfigurierenden und zu testenden Felder denkbar. Dieser ungeheure Aufwand bei der Inbetriebnahme kann prinzipiell durch dynamische Felder vermieden werden. Es sind jedoch keine Lösungen bekannt, mit denen dynamische Felder mit ausreichender Sicherheit und Flexibilität automatisch festgelegt werden.

Die DE 10 2005 054 359 A1 offenbart eine Schutzeinrichtung für ein Fahrzeug mit einem optischen Sensor. Dieser bestimmt durch Ortung von Objekten die Fahrtrichtung und/oder Geschwindigkeit. Anhand dieser Messgröße wird aus mehreren abgespeicherten Schutzfeldern eines ausgewählt oder eine Gültigkeitsprüfung eines eingelesenen Schutzfeldes vorgenommen. Damit wird das Problem ungelöst, die abgespeicherten Schutzfelder mit vertretbarem Aufwand vorzukonfigurieren oder das einzulesende Schutzfeld festzulegen. Zudem werden Fahrtrichtung und Geschwindigkeit besonders bei fehlenden oder untereinander verwechselbaren Orientierungspunkten in der Fahrzeugumgebung nicht genau genug bestimmt, und selbst exakte Kenntnis dieser beiden Parameter ist nur begrenzt geeignet, den tatsächlich abzusichernden Bereich zu bestimmen.

Um die Auswirkungen von Mehrdeutigkeiten bei der Geschwindigkeitsbestimmung in den Griff zu bekommen, schlägt die EP 2 428 862 A1 vor, den Geschwindigkeitsvektor mehrfach zu messen. Für alle derart gemessenen Geschwindigkeitsvektoren, deren Wahrscheinlichkeit, dass sie dem tatsächlichen Geschwindigkeitsvektor entsprechen, größer als ein Grenzwert ist, wird ein entsprechendes Einzelschutzfeld bestimmt. Das insgesamt überwachte Schutzfeld ist dann die Einhüllende der Einzelschutzfelder.

In der EP 2 339 376 B1 wird zunächst ein Schutzfeld einer bestimmten Breite und Länge vorgegeben, wobei diese Dimensionierung von der Fahrtgeschwindigkeit abhängen kann. Anschließend wird versucht, dieses Schutzfeld ohne Schutzfeldverletzung durch Variationen einer Verdrehung und eines lateralen Versatzes gegenüber der Fahrzeuglängsachse in die Fahrzeugumgebung einzupassen. Gelingt dies nicht, wird ein Nothalt ausgelöst. Dieses Vorgehen ist besonders in Gängen geeignet, wo durch die seitlichen Begrenzungen des Ganges mit einem rein statischen Schutzfeld bereits bei leichter Abweichungen einer mittigen Geradeausbewegung Notbremsungen ausgelöst würden, obwohl tatsächlich noch gar keine Gefährdung besteht.

Aus der DE 20 2005 004 466 U1 ist bekannt, zwei Laserscanner an einem führerlosen Transportsystem anzubringen. Aus deren Messdaten wird eine Geschwindigkeit und Bewegungsrichtung des Fahrzeugs ermittelt. Ein Schutzfeld wird in seiner Länge und Ausrichtung entsprechend angepasst.

Die GB 2 413 449 A beschreibt eine vorwärts tastende Vorrichtung für ein Fahrzeug, welche Hindernisse in einem variablen Überwachungsbereich vor dem Fahrzeug erkennt und gegebenenfalls den Fahrer warnt.

Besonders bei schnelleren Fahrzeugen oder solchen mit holonomen Antrieben sind die zugrunde gelegten Annahmen bei der Berechnung dynamischer Schutzfelder anhand eines Geschwindigkeitsvektors häufig nicht mehr zutreffend und deshalb die bekannten Lösungen nicht anwendbar.

Es ist daher Aufgabe der Erfindung, die Absicherung eines Fahrzeugs mit Hilfe dynamischer Schutzfelder zu verbessern.

Diese Aufgabe wird durch eine Sicherheitsvorrichtung für ein Fahrzeug mit mindestens einem optoelektronischen Sensor und ein Verfahren zur Absicherung eines Fahrzeugs nach Anspruch 1 beziehungsweise 13 gelöst. Dabei geht die Erfindung von einem dynamischen Schutzfeld aus, das also nicht vorab konfiguriert, sondern abhängig von der aktuellen Situation festgelegt wird, beispielsweise anhand der Umgebung des Fahrzeugs oder dessen Bewegungszustand. Da das Schutzfeld unter Umständen in verschiedenen Richtungen absichert, muss es nicht zwingend zusammenhängend sein. Die dann entstehende Mehrzahl von Teilschutzfeldern wird aber in ihrer Gesamtheit weiterhin als das Schutzfeld bezeichnet. Die Festlegung des dynamischen Schutz feldes erfolgt anhand einer Nothalttrajektorie. Das ist die Bewegungsbahn, welche das Fahrzeug nehmen würde, wenn sofort eine Notbremsung eingeleitet würde. Der Erfindung liegt also die Erkenntnis zugrunde, dass nur die Nothalttrajektorie den tatsächlichen Gefahrenbereich bestimmt.

Die Erfindung hat den Vorteil, dass eine Absicherung bei beliebigen Nothalttrajektorien ermöglicht wird. Deren Verlauf hängt von den physischen Gegebenheiten, beispielsweise dem Fahrverhalten einer automatischen Fahrzeugsteuerung ab und ist nicht künstlich durch Annahmen an die Fahrzeugumgebung oder die möglichen Fahrzeugbewegungen beschränkt. Es werden dynamische Schutzfelder erzeugt, die weitgehend dem idealen Gefahrenbereich entsprechen und nur noch so groß sind wie nötig, d.h. nur in der tatsächlichen Fahrtrichtung entsprechend dem Bremsweg lang ausgedehnt und ansonsten in den nicht gefährdeten Bereichen schmal bleiben. Dadurch erhöht sich die Verfügbarkeit, unnötige Notbremsungen werden vermieden, und auch der Einsatz wird flexibler und auch in stärker durch Begrenzungen eingeschränkter Umgebung ermöglicht. Mit Hilfe der Erfindung kann ein passendes dynamisches Schutzfeld auch für Fahrzeuge mit höheren Fahrgeschwindigkeiten von 3 m/s und mehr statt der vielfach noch üblichen höchstens 1,5 m/s sowie mit holonomen Antrieben festgelegt werden.

Es ist eine Kommunikationsverbindung zwischen der Fahrzeugsteuerung und der Schutzfeldbestimmungseinheit vorgesehen, um die Nothalttrajektorie von der Fahrzeugsteuerung zu der Schutzfeldbestimmungseinheit zu übertragen. Da die Informationen der Nothalttrajektorie sicherheitskritisch sind, ist der Kommunikationsweg vorzugsweise sicher oder ausfallsicher im Sinne einschlägiger Sicherheitsnormen. Die Fahrzeugsteuerung ist für die Bewegung des Fahrzeugs verantwortlich und entscheidet bei einem Nothalt über den Fahrweg, beispielsweise um während des Bremsens einem Hindernis wie einer Wand auszuweichen. Die Fahrzeugsteuerung kennt daher den zukünftigen Weg des Fahrzeugs im Falle einer Notbremsung am besten. Diese Informationsquelle wird durch Übertragen der jeweils aktuell in der Fahrzeugsteuerung geplanten potentiellen Nothalttrajektorie als beste Prognose der tatsächlichen Gefährdung durch das Fahrzeug genutzt. Die Fahrzeugsteuerung verwendet beispielsweise für die Bestimmung der Nothalttrajektorie Messdaten des Fahrzeugs, wie die aktuelle Geschwindigkeit und Position, Messdaten der Umgebung wie die Lage von Wänden und beweglichen Objekten oder Vorabwissen, etwa eine Umgebungskarte mit bekannten Hindernissen oder die maximale Bremsbeschleunigung und den engsten Kurvenradius, mit der das Fahrzeug aufgrund seiner Beschaffenheit die Notbremsung durchführen könnte. Indem die Sicherheitsvorrichtung die daraus berechnete Nothalttrajektorie verwendet, kommt es gar nicht mehr entscheidend darauf an, ob die Fahrzeugsteuerung eine besonders geeignete Nothalttrajektorie gefunden hat. Die Fahrzeugsteuerung wird jedenfalls eben diese Nothalttrajektorie tatsächlich verwenden, so dass dies auch genau der Weg des Fahrzeugs ist, der abgesichert werden muss.

Die Schutzfeldbestimmungseinheit ist bevorzugt dafür ausgebildet, eine Nothalttrajektorie zu berechnen. Dies ist beispielsweise dann nützlich, wenn die Fahrzeugsteuerung keine Nothalttrajektorie berechnet oder diese nicht zugänglich ist. Im Prinzip reproduziert die Schutzfeldbestimmungseinheit das Verfahren, mit dem eine Fahrzeugsteuerung die Nothalttrajektorie bestimmt. Vorzugsweise wird ein vereinfachtes Modell verwendet, da es nicht Sinn der Sicherheitsvorrichtung ist, die Fahrzeugsteuerung zu ersetzen, obwohl der Weg denkbar ist, dass umgekehrt die Fahrzeugsteuerung die derart bestimmte Nothalttrajektorie verwendet.

Die Schutzfeldbestimmungseinheit ist bevorzugt dafür ausgebildet, die Nothalttrajektorie aus einer zurückliegenden Fahrbahn, aus einer bisherigen und/oder einer aktuellen Geschwindigkeitsinformation des Fahrzeugs zu extrapolieren, insbesondere indem angenommen wird, dass das Fahrzeug seinen Fahrweg in einer geradlinigen Bewegung oder einer Kurve mit konstantem Radius fortsetzt. Dies ist ein Beispiel für ein vereinfachtes Modell zur Vorhersage der Nothalttrajektorie. Das bisherige oder aktuelle Bewegungsverhalten wird fortgeschrieben. Da sich die Vergangenheit nicht immer auf die Zukunft fortschreiben lässt, kommt dieses Modell mit höheren Geschwindigkeiten, holonomen Antrieben und insgesamt mit aus der Vergangenheit nicht ersichtlichen Bewegungen nur annähernd zurecht. Eine übergeordnete Aktion der Fahrzeugsteuerung, etwa ein plötzlicher Richtungswechsel, um einem Hindernis auszuweichen, ist vorab nicht erkennbar, und daher wird dann auch nicht immer ein geeignetes dynamisches Schutzfeld festgelegt.

Die Schutzfeldbestimmungseinheit ist bevorzugt dafür ausgebildet, die Nothalttrajektorie als diskrete Folge von Elementarbewegungen zu empfangen oder zu berechnen oder die Nothalttrajektorie in eine diskrete Folge von Elementarbewegungen zu unterteilen. Die Elementarbewegungen sind also im Prinzip infinitesimale Bewegungsschritte und praktisch Teilabschnitte der Nothalttrajektorie, die für eine schrittweise digitale Bearbeitung geeignet sind. Damit lassen sich auch komplexe Nothalttrajektorien verarbeiten.

Die Elementarbewegungen weisen bevorzugt eine Pose, einen Bogen und/oder ein Geradenstück auf. Die Pose wird genutzt, um eine Startposition abzusichern. Ein Bogen deckt Bewegungen mit Richtungsänderung ab, und ein Geradenstück beschreibt eine Translation, beispielsweise eine Vorwärts-, Rückwärts- oder gerade im Falle holonomer Antriebe auch Seitwärtsbewegung. Daraus lassen sich beliebige Bewegungsbahnen zusammensetzen, und es müssen nur ganz wenige unterschiedliche Typen von Elementarbewegungen verarbeitet werden.

In der Schutzfeldbestimmungseinheit ist vorzugsweise jeweils ein Elementarschutzfeld für jede Elementarbewegung abgelegt. Diese Elementarschutzfelder müssen dann im Betrieb nicht mehr berechnet werden. Vielmehr können sie vorab konfiguriert und getestet werden. Da nur je ein Elementarschutzfeld pro Elementarbewegung erforderlich ist, bleibt der Konfigurationsaufwand äußerst gering und insbesondere gänzlich unabhängig vom Fahrverhalten.

Die Schutzfeldbestimmungseinheit ist bevorzugt dafür ausgebildet, das Schutzfeld als Überlagerung der Elementarschutzfelder der diskreten Folge von Elementarbewegungen zu der Nothalttrajektorie festzulegen. Anders ausgedrückt ist das im Betrieb verwendete Schutzfeld die ODER-Überlagerung der Elementarschutzfelder längs der Nothalttrajektorie. Dadurch wird der gesamte Bremsweg geschützt.

Die Schutzfeldbestimmungseinheit ist bevorzugt dafür ausgebildet, eine Umhüllende für eine Überlagerung der Elementarschutzfelder der diskreten Folge von Elementarbewegungen zu der Nothalttrajektorie als Schutzfeld festzulegen. Dabei kann beispielsweise eine konvexe Hülle bestimmt werden, oder es wird eine einfache geometrische Form vorgegeben und gesucht, in welcher Position und kleinsten Skalierung sie die Überlagerung der Elementarschutzfelder umschreibt. Die Umhüllende stellt eine Vereinfachung der Außenkontur beispielsweise zur Visualisierung und einen gewissen Sicherheitspuffer dar.

In der Schutzfeldbestimmungseinheit sind bevorzugt eine Vielzahl vorgegebener Schutzfelder abgelegt, wobei die Schutzfeldbestimmungseinheit zur dynamischen Festlegung des Schutzfeldes eines, insbesondere das kleinste, der abgelegten Schutzfelder auswählt, welches alle Elementarschutzfelder der diskreten Folge von Elementarbewegungen zu der Nothalttrajektorie enthält. Dazu müssen nur die abgelegten Schutzfelder vom kleinsten angefangen durchprobiert werden, bis bei einer UND-Verknüpfung keine zu schützenden Punkte der Überlagerung mehr übrig bleiben. Dadurch entsteht ein Hybrid zwischen einer Auswahl von vorkonfigurierten Schutzfeldern und der Bestimmung des Schutzfeldes aus einer Nothalttrajektorie.

Die Sicherheitsvorrichtung umfasst bevorzugt mehrere zueinander registrierte optoelektronische Sensoren zur Erweiterung von deren Sichtbereich. Effektiv handelt es sich dann um mehrere Sensoren, die wie ein einziger Sensor agieren. Die Sensoren sind dazu direkt, über die Sicherheitsvorrichtung oder über eine weitere Sicherheitssteuerung miteinander verbunden. Dadurch können auch beispielsweise gegenüber einem der Sensoren durch das Fahrzeug verdeckte Bereiche erfasst sowie mit kleineren Sichtwinkeln eine 360°-Rundumsicht erreicht werden.

Die Schutzfeldbestimmungseinheit und/oder die Schutzfeldüberwachungseinheit ist bevorzugt in den optoelektronischen Sensor integriert. Damit übernimmt der optoelektronische Sensor Teile der Sicherheitsvorrichtung oder ist sogar mit ihr identisch. Alternativ erfolgt die Festlegung der dynamischen Schutzfelder und/oder deren Auswertung in einer an die Sensoren angeschlossenen Sicherheitssteuerung, die mit der Fahrzeugsteuerung kommuniziert, oder in die Fahrzeugsteuerung integriert.

Der optoelektronische Sensor ist bevorzugt ein Laserscanner oder eine 3D-Kamera. Beide Arten von Sensoren liefern zuverlässige Informationen über Objekte und ermöglichen eine Abstandsmessung, so dass eine flexible Festlegung von Schutzfeldern und deren sichere Überwachung auf unzulässige Schutzfeldeingriffe möglich ist.

In vorteilhafter Weiterbildung ist vorgesehen, ein Fahrzeug mit einem erfindungsgemäßen Sensor auszurüsten. Der Begriff Fahrzeug ist sehr weit zu verstehen und umfasst jegliche mobile Maschine, also auch einen Roboter. Eine fehlersichere Fahrzeugsteuerung steht dabei mit der Sicherheitsvorrichtung in Kommunikationsverbindung, um die Nothalttrajektorie zu kommunizieren und gegebenenfalls die Sensordaten zur Orientierung und Bestimmung eines geeigneten Fahrwegs zu verwenden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners;
- Fig. 2: eine Draufsicht auf ein Fahrzeug mit einer Sicherheitsvorrichtung und mehreren Laserscannern;
- Fig. 3: eine beispielhafte Darstellung eines Fahrweges mit Posen A-C;
- Fig. 4a-c: beispielhafte Messdaten eines Scanners und auf Basis von Extrapolation eines Geschwindigkeitsvektors festgelegte Schutzfelder in den Posen A-C der Figur 3;
- Fig. 5a-c: beispielhafte Messdaten eines Scanners und anhand einer von einer Fahrzeugsteuerung übergebenen Nothalttrajektorie festgelegte Schutzfelder in den Posen A-C der Figur 3;
- Fig. 6a: eine Darstellung von möglichen Elementarbewegungen, in die eine Nothalttrajektorie zerlegt werden kann, und der zugehörigen Elementarschutzfelder;
- Fig. 6b: mehrere Stadien der Überlagerung von Elementarschutzfeldern zur Festlegung eines dynamischen Schutzfeldes anhand einer Nothalttrajektorie;
- Fig. 7a: ein beispielhaftes Schutzfeld bei Extrapolation einer Vorwärtsbewegung kurz vor einer Kurve;
- Fig. 7b: ein beispielhaftes Schutzfeld bei der Vorwärtsbewegung kurz vor einer Kurve gemäß Figur 7a, aber in Kenntnis der Kurve anhand einer von einer Fahrzeugssteuerung übergebenen Nothalttrajektorie; und
- Fig. 7c: eine vergleichende Übereinanderdarstellung der Schutzfelder gemäß Figur 7a und 7b.

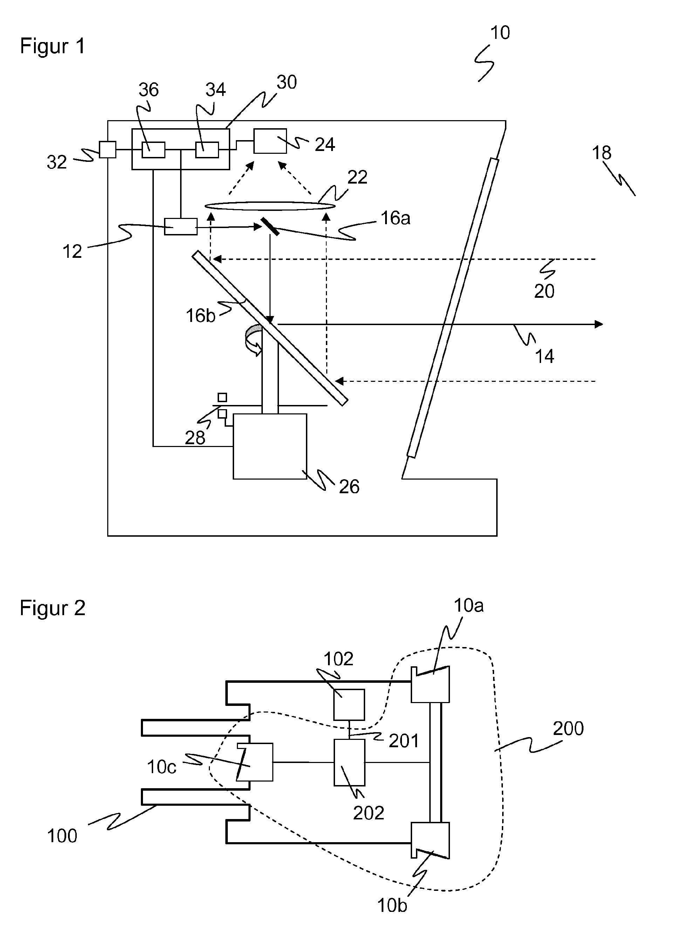

Anhand der Figur 1 wird zunächst die Funktionsweise eines entfernungsmessenden Laserscanners 10 als eine Ausführungsform eines Sensors beschrieben, der als eine erfindungsgemäße Sicherheitsvorrichtung oder als Teil davon verwendet werden kann. Andere insbesondere abstandsmessende Sensoren, wie Stereokameras oder auf Lichtlaufzeit basierende Kamerachips etwa nach dem Prinzip der Photonmischdetektion, sind an sich bekannt und können anstelle des Laserscanners 10 oder zu dessen Ergänzung eingesetzt werden.

Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird von dem Lichtempfänger 24 ein reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Laserscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

Das eigentliche Ziel der Auswertung in einem zur Absicherung eingesetzten Laserscanner 10 ist, Schutzfeldverletzungen zu erkennen und daraufhin ein Sicherheitssignal an einem Sicherheitsausgang 32 (OSSD, Output Signal Switching Device) bereitzustellen. Über die Winkel- und Entfernungsdaten berechnet die Auswerteeinheit 30 hierzu den Ort eines Objektes in dem Überwachungsbereich 18. In einer Schutzfeldbestimmungseinheit 34 werden in einer anhand der Figuren 2 bis 7 näher erläuterten Weise Grenzen für ein Schutzfeld innerhalb des Überwachungsbereichs 18 festgelegt, etwa in Form von Eckpunkten eines Polygonzuges. Eine Schutzfeldüberwachungseinheit 36 prüft, ob sich eines der erfassten Objekte innerhalb des Schutzfeldes befindet. Dies wird als Schutzfeldverletzung erkannt, sofern das Objekt nicht ausnahmsweise in dem Schutzfeld zulässig ist, beispielsweise weil es sehr klein ist oder nur ganz kurzzeitig erfasst wird. Bei einer Schutzfeldverletzung wird das Sicherheitssignal an dem Sicherheitsausgang 32 ausgegeben.

Die Auswertungseinheit 30 mit der Schutzfeldbestimmungseinheit 34 und der Schutzfeldüberwachungseinheit 36 kann abweichend von der Darstellung auch ganz oder teilweise außerhalb des Laserscanners 10 implementiert sein. Der Laserscanner 10 ist also wahlweise allein oder im Zusammenhang mit externen Auswertungen eine Sicherheitsvorrichtung zur Absicherung eines Fahrzeugs. Weiter ist denkbar, die Daten mehrerer Laserscanner 10 zusammenzuführen und gemeinsam auf sicherheitskritische Ereignisse auszuwerten.

Figur 2 zeigt eine schematische Draufsicht auf ein Fahrzeug 100, hier einen Gabelstapler, das von einer Fahrzeugsteuerung 102 fahrerlos gesteuert und dabei von einer Sicherheitsvorrichtung 200 abgesichert wird. An dem Fahrzeug 100 sind an mehreren Seiten Laserscanner 10a-c gemäß Figur 1 als Beispiele für optoelektronische Sensoren zur Überwachung der Fahrzeugumgebung und als Teil der Sicherheitsvorrichtung 200 angebracht. Die Laserscanner 10a-c sind an eine Sicherheitssteuerung 202 angeschlossen und zueinander registriert, d.h. es ist ein gemeinsames Koordinatensystem bekannt, um die Messdaten zu fusionieren. Die Sicherheitssteuerung 202 umfasst optional eine gemeinsame Schutzfeldbestimmungseinheit und eine gemeinsame Schutzfeldüberwachungseinheit, oder diese sind teilweise oder gänzlich wie in Figur 1 in die Laserscanner 10a-c integriert und werden nur auf höherer Ebene über die Sicherheitssteuerung 202 oder über eine Netzwerkverbindung (z.B. sicherer Feldbus) miteinander verbunden, um so die gemeinsame Schutzfeldbestimmungseinheit oder die gemeinsame Schutzfeldüberwachungseinheit zu bilden.

Erkennt die Sicherheitsvorrichtung 200 eine Schutzfeldverletzung, so wird an die Fahrzeugsteuerung 102 ein sicheres Abschaltsignal ausgegeben, um das Fahrzeug 100 zu verlangsamen oder einen Nothalt einzuleiten. Die Fahrzeugsteuerung 102 hat für diesen Fall eine Nothalttrajektorie berechnet, auf der sie möglichst schnell und ohne Kollision zum Stillstand kommt. Diese Nothalttrajektorie wird umgekehrt vorzugsweise periodisch oder auf Anfrage an die Sicherheitsvorrichtung 200 übergeben, um für die Absicherung des Bremswegs auf der Nothalttrajektorie geeignete Schutzfelder festzulegen. Zur Kommunikation zwischen Sicherheitsvorrichtung 200 und Fahrzeugsteuerung 100 besteht vorzugsweise eine ausfallsichere Verbindung 201.

Anstelle einer Notbremsung kann sich die Fahrzeugsteuerung 102 in Zusammenarbeit mit der Sicherheitsvorrichtung 200 auch dafür entscheiden, eine neue Nothalttrajektorie zu finden, deren zugehöriges dynamisches Schutzfeld nicht verletzt wäre. Dann könnte das Fahrzeug 100 auf diesem alternativen Bremsweg anhalten und ist deshalb durch den erkannten Schutzfeldeingriff nicht zusätzlich gefährdet. Des Weiteren kann dem Schutzfeld ein Warnfeld vorgelagert sein, wobei ein Eingriff in das Warnfeld noch keinen Nothalt, sondern zunächst lediglich eine Warnfunktion wie eine Hupe auslöst. Denkbar ist auch, ein zusätzliches vorgelagertes Schutzfeld zu verwenden, beispielsweise um die Geschwindigkeit zu reduzieren, ohne das Fahrzeug über einen Nothalt bis zum Stillstand herunterzubremsen.

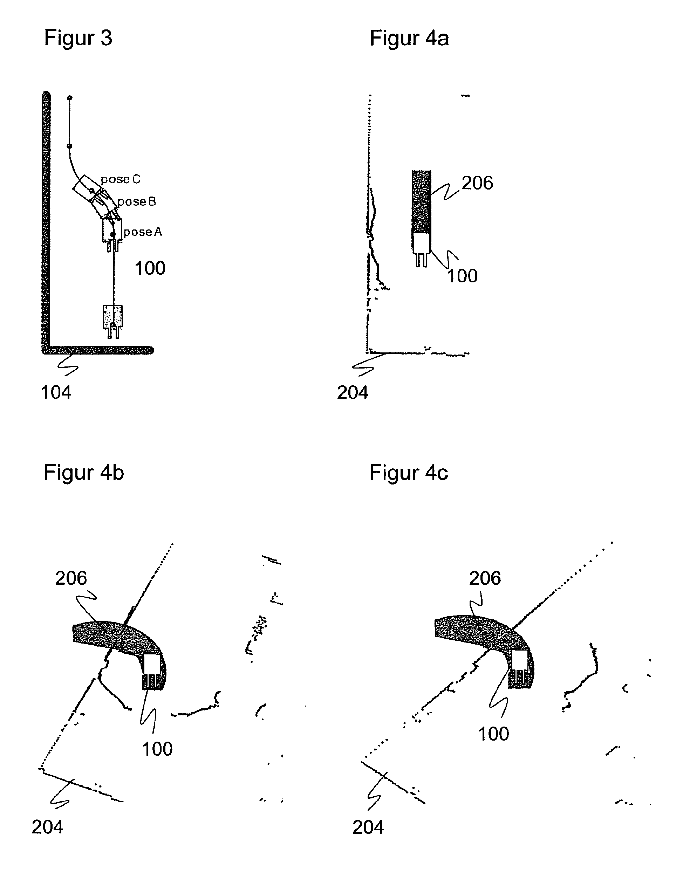

Figur 3 zeigt einen beispielhaften Fahrweg des Fahrzeugs 100, bei dem sich das Fahrzeug zunächst in einigem Abstand parallel zu einer Wand 104 bewegt, sich dieser dann annähert und seine Fahrt dann parallel zu der Wand 104 in kürzerem Abstand fortsetzt. Dabei sind drei Posen A bis C während der Fahrt gekennzeichnet, die im Folgenden genauer untersucht werden.

Figur 4a-c zeigt kumulierte Messdaten 204 der Laserscanner 10a-c sowie Schutzfelder 206 in den Posen A bis C. Die Berechnung der Schutzfelder 206 erfolgt in diesem Ausführungsbeispiel, das nicht in den Schutzbereich der Ansprüche fällt, anhand einer Nothalttrajektorie, die in der Sicherheitsvorrichtung 206 aus dem momentanen Bewegungszustand des Fahrzeugs 100 abgeleitet wird. Die Informationen über den Bewegungszustand stammen von der Fahrzeugsteuerung 102 oder sind aus den Messdaten 204 abgeleitet, beispielsweise durch Wiedererkennen von natürlichen oder künstlichen Orientierungsmerkmalen zu mehreren Zeitpunkten. Daraus kann ein Geschwindigkeitsvektor in zwei oder drei Freiheitsgraden bestimmt werden. Eine Extrapolation der Nothalttrajektorie aus dem Geschwindigkeitsvektor und eine Berechnung eines Schutzfeldes 206 aus dieser Nothalttrajektorie basiert auf mehreren Annahmen:
- Die Dimensionierung des dynamischen Schutzfeldes 206 ist unabhängig vom aktuellen Ort des Fahrzeugs 100. Ansonsten müsste positionsabhängig auf ein anderes Schutzfeld umgeschaltet werden.
- Das Fahrzeug 100 bewegt sich ausschließlich auf Kreisbahnen mit konstantem Krümmungsradius r=v/ω, wobei eine Gerade ein Kreis mit unendlicher Krümmung ist.
- Der Krümmungsradius bleibt auch bei einem Nothalt konstant.

Mehr Informationen gibt nämlich ein Geschwindigkeitsvektor nicht her und kann insbesondere nicht abweichende Steuerungseingriffe der Fahrzeugsteuerung 102 vorhersagen.

In den Abbildungen gemäß Figur 4a-c bewegt sich das Fahrzeug 102 rein beispielhaft mit 2,8 m/s auf den Geraden und mit 40°/s bei 1,8 m/s in der S-Kurve. Während auf dem anfänglichen Geradenstück das Schutzfeld 206 aller Voraussicht nach mit dem Bremsweg der Fahrzeugsteuerung 102 übereinstimmt, ist dies spätestens in der Pose A gemäß Figur 4a infinitesimal vor dem Kurveneingang und ohnehin in den Posen B und C gemäß den Figuren 4b und 4c innerhalb der Kurve nicht der Fall. Das allein aufgrund des Geschwindigkeitsvektors festgelegte Schutzfeld 206 ragt deutlich in die Wand 104 hinein. Diesen Bremsweg wird die Fahrzeugsteuerung 102 nicht wählen, um eine Kollision mit der Wand 104 zu vermeiden. Das Schutzfeld 206 sichert zwar besser ab als ein statisches Schutzfeld in linearer Vorwärtsrichtung, deckt aber den Gefahrenbereich nicht vollständig ab.

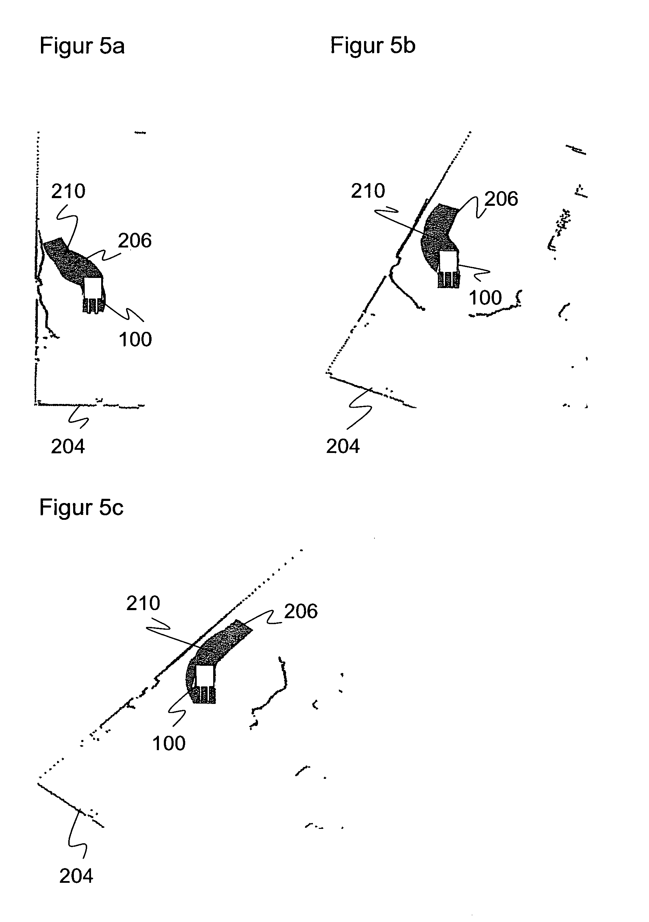

Deshalb übernimmt die Sicherheitssteuerung 200 in einer erfindungsgemäßen Ausführungsform die Nothalttrajektorie der Fahrzeugsteuerung 102 als Grundlage für die Festlegung der Schutzfelder 206. Das ist also derjenige potentielle Bremsweg, den die Fahrzeugsteuerung 102 unter Einbeziehung ihres gesamten Wissens über das Fahrzeug 100 und dessen Umgebung zur Vermeidung von Unfällen gegenwärtig wählen würde, falls es zu einem Nothalt kommt. Die dabei entstehenden Schutzfelder 206 in den Posen A bis C sind in Figur 5a-c gezeigt. Hier entsprechen die Schutzfelder 206 in fast idealer Weise den tatsächlichen Gefährdungsbereichen, denn die Nothalttrajektorie enthält die Information, dass die Fahrzeugsteuerung 102 das Fahrzeug 100 im Falle einer Notbremsung entlang der S-Kurve führen wird, um der Wand 104 auszuweichen. Diese Gefahrenbereiche sind es, die für eine optimale Absicherung von der Sicherheitssteuerung 200 mit deren Laserscannern 10a-c zu überwachen sind.

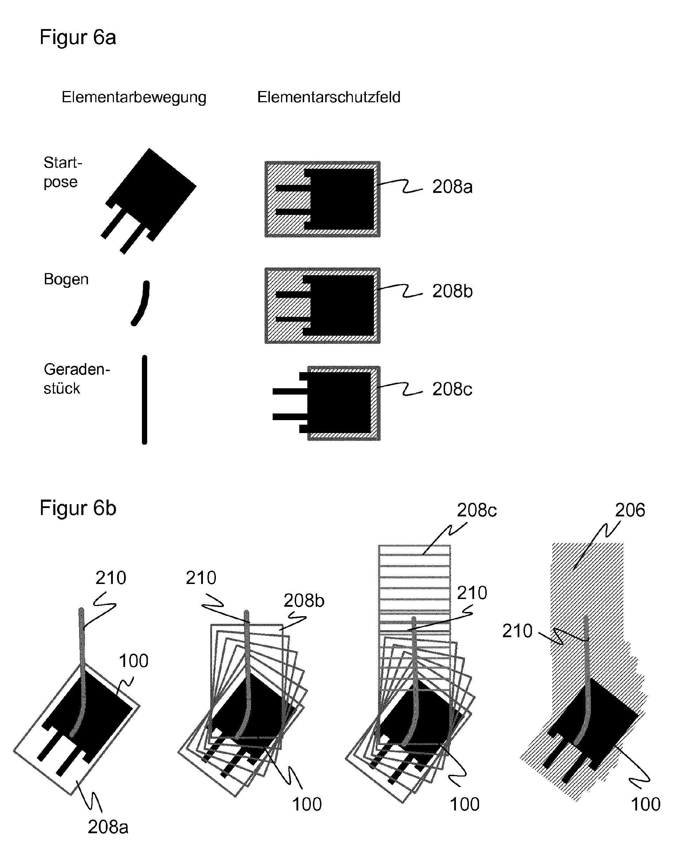

Unabhängig davon, ob die Nothalttrajektorie durch eine Berechnung wie zu Figur 4 erläutert oder durch Übergabe aus der Fahrzeugsteuerung 102 wie zu Figur 5 erläutert erhalten wird, kann die Festlegung des Schutzfeldes 206 in einer Ausführungsform besonders einfach durch Zerlegung der Nothalttrajektorie in sogenannte Elementarbewegungen erfolgen. Dazu zeigt Figur 6a auf der linken Seite drei exemplarische Elementarbewegungen, aus denen sich praktisch beliebige Nothalttrajektorien zusammensetzen lassen. Dabei handelt es sich um eine Startpose, einen Bogen und ein Geradenstück. Da die Elementarbewegungen im Rahmen des rechnerisch in einem vorgegebenen digitalen Baustein Möglichen um infinitesimale Schritte handelt, sind durch Bögen verschiedener Krümmung sowie eine für die erforderliche Länge geeignete Anzahl Geradenstücke Kurven praktisch beliebiger Art zusammensetzbar. Eine Beschränkung auf Kreisbahnen mit konstantem Radius gibt es nicht mehr.

Den Elementarbewegungen ist wie auf der rechten Seite der Figur 6a gezeigt jeweils ein Elementarschutzfeld 208a-c zugeordnet. Das Elementarschutzfeld 208a-c sichert gerade den infinitesimalen Bewegungsschritt auf der Nothalttrajektorie für die zugehörige Elementarbewegung ab.

Figur 6b zeigt in vier Schritten, wie mit Hilfe von Elementarbewegungen und Elementarschutzfeidern 208 das zu der Nothalttrajektorie 210 in Figur 6a passende Schutzfeld 206 festgelegt wird. Im ersten Schritt wird das Elementarschutzfeld 208a zu der Startpose hinzugefügt. Im zweiten Schritt kommen mehrere Elementarschutzfelder 208b für Bögen in Abschnitten der Kurve der Nothalttrajektorie 210 hinzu. Im dritten Schritt werden mehrere Elementarschutzfelder 208c für ein Geradenstück auf der sich anschließenden Vorwärtsbewegung längs der Nothalttrajektorie 210 ergänzt. Anschließend wird in einem vierten Schritt das Schutzfeld 206 als Überlagerung, also algorithmisch als ODER-Verknüpfung aller verwendeten Elementarschutzfelder 208a-c gebildet. Es ist denkbar, in einem weiteren Schritt die Überlagerung mit einem Sicherheitspuffer zu versehen und zu glätten, indem eine Umhüllende, etwa eine konvexe Hülle oder eine umgebende geometrische Form (Bounding Box) gesucht wird. Das ist aber häufig eher kosmetisch und kann im Extremfall sogar unnötige Schwierigkeiten durch zusätzlichen Rechenaufwand und übergroße Schutzfelder 206 mit entsprechenden Verfügbarkeitsproblemen nach sich ziehen. In einer anderen Ausführungsform wird nicht die Überlagerung selbst als Schutzfeld 206 verwendet, sondern es wird aus einer Vielzahl beispielsweise anhand vieler diskreter Geschwindigkeitsintervalle vorausberechneter und gespeicherter Schutzfelder 206 dasjenige gesucht, welches in möglichst guter Übereinstimmung mit der Überlagerung ist. Das erfordert in der Regel Zusatzaufwand, hat aber den Vorteil, dass man eine Kontrolle über die verwendbaren Schutzfelder 206 behält.

Das anhand der Figur 6 erläuterte Vorgehen zeigt, wie aus einer vorgegebenen Nothalttrajektorie 210 als Eingabe ein dynamisches Schutzfeld 206 als Ausgabe entsteht. Beispielhafte Ergebnisse für eine einfache Modellberechnung der Nothalttrajektorie 210 basierend auf dem Geschwindigkeitsvektor des Fahrzeuges zeigt die Figur 4, für eine von der Fahrzeugsteuerung 102 vorgegebene Nothalttrajektorie die Figur 5. Prinzipiell kann auch die Sicherheitssteuerung 200 selbst ein komplizierteres Modell unter Einbeziehung der Physik des Fahrzeugs 100 und dessen Umgebung verwenden, um eine realistische Nothalttrajektorie wie aus der Fahrzeugsteuerung 102 zu generieren. Damit wird aber die übliche Aufgabenverteilung zwischen Fahrzeugsteuerung 102 und Absicherung durch die Sicherheitsvorrichtung 200 aufgegeben. Zudem kann es sein, dass zwar die Sicherheitssteuerung 200 eine geeignete Nothalttrajektorie 210 generiert, die Fahrzeugsteuerung 102 aber dennoch eine andere verwendet, so dass die Vorhersagekraft begrenzt ist. Die beste Informationsquelle ist demnach die Fahrzeugsteuerung 102, sofern sie als Informationsquelle genutzt werden kann. Das ist aber nicht immer der Fall, etwa wenn die Fahrzeugssteuerung 102 nur als Fahrerassistenz für einen menschlichen Fahrer dient oder keine Übermittlung der Nothalttrajektorie vorgesehen und möglich ist.

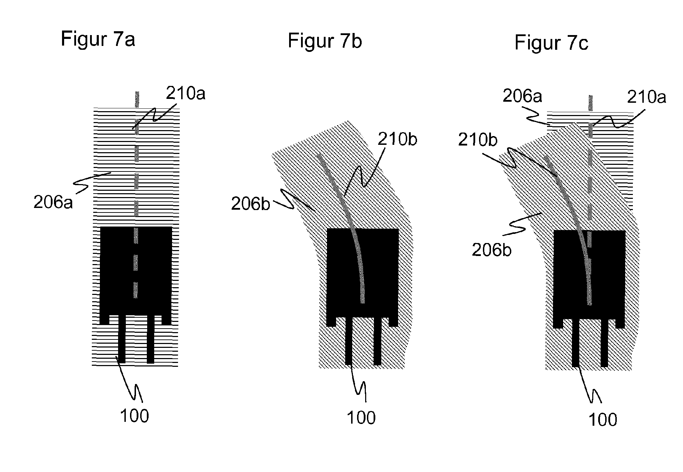

Figur 7 zeigt noch einmal einen Vergleich eines Schutzfeldes 206a, das mit einer Nothalttrajektorie aus einer Extrapolation des Geschwindigkeitsvektors festgelegt ist, und eines Schutzfeldes 206b aus einer Nothalttrajektorie der Fahrzeugsteuerung 102. Dabei ist der Fahrweg gerade so gewählt, dass sich das Fahrzeug 100 derzeit noch geradeaus bewegt, aber unmittelbar davor steht, eine Kurve zu fahren. Der Geschwindigkeitsvektor zeigt nicht in die zukünftige Kurve. Ein Sensor wie der Laserscanner 10 kann ganz allgemein immer nur dazu dienen, aktuelle oder vergangene physikalische Eigenschaften zu erkennen. Der vergangene Fahrweg und der aktuelle Geschwindigkeitsvektor lassen aber nicht immer sichere Rückschlüsse auf die zukünftige Kurve zu, jedenfalls dann nicht, wenn die Entscheidung über die Kurvenfahrt in einer anderen Instanz fällt und gar nicht von der Umgebung erzwungen wird.

Folglich liegt wie in Figur 7a gezeigt ein dynamisches Schutzfeld 206a, welches auf einem aus Sensordaten berechneten Geschwindigkeitsvektor beruht, auch unmittelbar vor der Kurve immer noch geradeaus und nicht in Richtung der Kurve, da die extrapolierte Nothalttrajektorie 210a die Kurve nicht berücksichtigt. Die Fahrzeugsteuerung 102 dagegen weiß wie in Figur 7b gezeigt zu diesem Zeitpunkt bereits, dass sich die Nothalttrajektorie 210b des Bremswegs in die Kurve hinein erstreckt. Entsprechend berücksichtigt ein daraus festgelegtes dynamisches Schutzfeld 206b die Kurve und sichert daher den Gefahrenbereich wesentlich besser ab. In Figur 7c sind die beiden Nothalttrajektorien 210a-b und die daraus festgelegten Schutzfelder 206a-b zum Vergleich übereinander gelegt. Neben einem gemeinsamen Überlappungsbereich zeigt das Schutzfeld 206a aus der Extrapolation des Geschwindigkeitsvektors einen exklusiv überwachten Teilbereich und einen Fehlbereich, den nur das andere Schutzfeld 206b überdeckt. Beides behindert die Funktion der Sicherheitsvorrichtung 200: Der exklusiv überwachte Teilbereich kann unnötige Nothalte auslösen und beeinträchtigt die Verfügbarkeit, während in dem Fehlbereich Schutzfeldverletzungen übersehen werden und damit die Sicherheit reduziert ist.

## Patentansprüche

1. Sicherheitsvorrichtung (200) für ein Fahrzeug (100), insbesondere ein fahrerloses Fahrzeug, mit mindestens einem optoelektronischen Sensor (10) zur Erfassung von Objekten in einem Überwachungsbereich (18), mit einer Schutzfeldbestimmungseinheit (34) zur dynamischen Festlegung eines Schutzfeldes (206) innerhalb des Überwachungsbereichs (18), mit einer Schutzfeldüberwachungseinheit (36) zur Erkennung von unzulässigen Eingriffen in das Schutzfeld (206) als Schutzfeldverletzung und mit einem Sicherheitsausgang (32) zur Ausgabe eines Nothalt- oder Abbremssignals an eine Fahrzeugsteuerung (102) des Fahrzeugs (100) im Falle einer Schutzfeldverletzung,
**dadurch gekennzeichnet,**
**dass** die Schutzfeldbestimmungseinheit (34) dafür ausgebildet ist, das Schutzfeld (206) anhand einer Nothalttrajektorie (210) festzulegen und dabei auch eine Kurve der Nothalttrajektorie (210) zu berücksichtigen und dass eine Kommunikationsverbindung (201) zwischen der Fahrzeugsteuerung (102) und der Schutzfeldbestimmungseinheit (34) vorgesehen ist, um die Nothalttrajektorie (210) von der Fahrzeugsteuerung (102) zu der Schutzfeldbestimmungseinheit (34) zu übertragen, wobei die Nothalttrajektorie (210) die Bewegungsbahn ist, welche die Fahrzeugsteuerung (102) im Falle einer Notbremsung für das Fahrzeug (100) wählt.

2. Sicherheitsvorrichtung (200) nach Anspruch 1,
wobei die Kommunikationsverbindung (201) eine sichere Kommunikationsverbindung ist.

3. Sicherheitsvorrichtung (200) nach Anspruch 1 oder 2,
wobei die Schutzfeldbestimmungseinheit (34) dafür ausgebildet ist, eine von der Fahrzeugsteuerung (102) übertragene Nothalttrajektorie (210) als diskrete Folge von Elementarbewegungen zu empfangen.

4. Sicherheitsvorrichtung (200) nach Anspruch 3,
wobei die Elementarbewegungen einen Bogen und/oder ein Geradenstück aufweisen.

5. Sicherheitsvorrichtung (200) nach Anspruch 3 oder 4,
wobei in der Schutzfeldbestimmungseinheit (34) jeweils ein Elementarschutzfeld (208a-c) für jede Elementarbewegung abgelegt ist, wobei das Elementarschutzfeld jeweils den Bewegungsschritt der zugehörigen Elementarbewegung absichert.

6. Sicherheitsvorrichtung (200) nach Anspruch 5,
wobei die Schutzfeldbestimmungseinheit (34) dafür ausgebildet ist, das Schutzfeld (206) als Überlagerung der Elementarschutzfelder (208a-c) der diskreten Folge von Elementarbewegungen zu der Nothalttrajektorie (210) festzulegen.

7. Sicherheitsvorrichtung (200) nach Anspruch 5 oder 6,
wobei die Schutzfeldbestimmungseinheit (34) dafür ausgebildet ist, eine Umhüllende für eine Überlagerung der Elementarschutzfelder (208a-c) der diskreten Folge von Elementarbewegungen zu der Nothalttrajektorie (210) als Schutzfeld (206) festzulegen.

8. Sicherheitsvorrichtung (200) nach Anspruch 5,
wobei in der Schutzfeldbestimmungseinheit (34) eine Vielzahl vorgegebener Schutzfelder abgelegt sind, und wobei die Schutzfeldbestimmungseinheit (34) zur dynamischen Festlegung des Schutzfeldes (206) eines, insbesondere das kleinste der abgelegten Schutzfelder auswählt, welches alle Elementarschutzfelder (208a-c) der diskreten Folge von Elementarbewegungen zu der Nothalttrajektorie (210) enthält.

9. Sicherheitsvorrichtung (200) nach einem der vorhergehenden Ansprüche, die mehrere zueinander registrierte optoelektronische Sensoren (10a-c) zur Erweiterung von deren Sichtbereich umfasst.

10. Sicherheitsvorrichtung (200) nach einem der vorhergehenden Ansprüche, wobei die Schutzfeldbestimmungseinheit (34) und/oder die Schutzfeldüberwachungseinheit (36) in den optoelektronischen Sensor (10) integriert ist.

11. Sicherheitsvorrichtung (200) nach einem der vorhergehenden Ansprüche, wobei der optoelektronische Sensor (10) ein Laserscanner oder eine 3D-Kamera ist.

12. Fahrzeug (100), insbesondere fahrerloses Fahrzeug, mit einer Sicherheitsvorrichtung (200) nach einem der vorhergehenden Ansprüche und mit einer fehlersicheren Fahrzeugsteuerung (102), die mit der Sicherheitsvorrichtung (200) in Kommunikationsverbindung (201) steht.

13. Verfahren zur Absicherung eines Fahrzeugs (100), insbesondere eines fahrerlosen Fahrzeugs, bei dem mindestens ein optoelektronischer Sensor (10) Objekte in einem Überwachungsbereich (18) um das Fahrzeug (100) erfasst und unzulässige Eingriffe in ein dynamisch innerhalb des Überwachungsbereichs (18) festgelegtes Schutzfeld (206) als Schutzfeldverletzung erkannt werden, wobei im Falle einer Schutzfeldverletzung ein Nothalt- oder Abbremssignal an eine Fahrzeugsteuerung (102) des Fahrzeugs (100) ausgegeben wird,
**dadurch gekennzeichnet,**
**dass** das Schutzfeld (206) anhand einer Nothalttrajektorie (210) für das Fahrzeug (100) unter Berücksichtigung auch einer Kurve der Nothalttrajektorie (210) festgelegt wird, wobei die Nothalttrajektorie (210) von der Fahrzeugsteuerung (102) zu der Schutzfeldbestimmungseinheit (34) übertragen wird und die Bewegungsbahn ist, welche die Fahrzeugsteuerung (102) im Falle einer Notbremsung für das Fahrzeug (100) wählt.

## Claims

1. A safety apparatus (200) for a vehicle (100), in particular a driverless vehicle, having at least one optoelectronic sensor (10) for detecting objects in a monitored zone (18), having a protected field determination unit (34) for the dynamic definition of a protected field (206) within the monitored zone (18), having a protected field monitoring unit (36) for recognizing unpermitted intrusions into the protected field (206) as a protected field incursion and having a safety output (32) for outputting an emergency stop signal or braking signal to a vehicle control (102) of the vehicle (100) in the case of a protected field incursion,
**characterized in that** the protected field determination unit (34) is configured to define the protected field (206) with reference to an emergency stop trajectory (210) and to also consider a curve of the emergency stop trajectory (210), and **in that** a communication connection (201) is provided between the vehicle control (102) and the protected field determination unit (34) to transmit the emergency stop trajectory (210) from the vehicle control (102) to the protected field determination unit (34), wherein the emergency stop trajectory (210) is that trajectory the vehicle control (102) chooses for the vehicle (100) in case of an emergency stop.

2. The safety apparatus (200) in accordance with claim 1,
wherein the communication connection (201) is a safe communication connection.

3. The safety apparatus (200) in accordance with claim 1 or 2,
wherein the protected field determination unit (34) is configured to receive an emergency stop trajectory (210) transmitted from the vehicle control (102) as a discrete sequence of elemental movements.

4. The safety apparatus (200) in accordance with claim 3,
wherein the elemental movements comprise an arc and/or a straight piece.

5. The safety apparatus (200) in accordance with claim 3 or 4,
wherein a respective elemental protected field (208a-c) is stored in the protected field determination unit (34) for every elemental movement, wherein the elemental protected field (208a-c) safeguards the respective movement step of the associated elemental movement.

6. The safety apparatus (200) in accordance with claim 5,
wherein the protected field determination unit (34) is configured to define the protected field (206) as a superposition of the elemental protected fields (208a-c) of the discrete sequence of elemental movements of the emergency stop trajectory (210).

7. The safety apparatus (200) in accordance with claim 5 or 6,
wherein the protected field determination unit (34) is configured to define a contour for a superposition of the elemental protected fields (208a-c) of the discrete sequence of elemental movements of the emergency stop trajectory (210) as the protected field (206).

8. The safety apparatus (200) in accordance with claim 5,
wherein a plurality of predefined protected fields are stored in the protected field determination unit (34), and wherein the protected field determination unit (34) selects one, in particular the smallest of the stored protected fields for the dynamic definition of the protected field (206), which contains all elemental protected fields (208a-c) of the discrete sequence of elemental movements of the emergency stop trajectory (210).

9. The safety apparatus (200) in accordance with any of the preceding claims, comprising a plurality of mutually registered optoelectronic sensors (10a-c) for expanding its range of view.

10. The safety apparatus (200) in accordance with any of the preceding claims,
wherein the protected field determination unit (34) and/or the protected field monitoring unit (36) is integrated into the optoelectronic sensor (10).

11. The safety apparatus (200) in accordance with any of the preceding claims,
wherein the optoelectronic sensor (10) is a laser scanner or a 3D camera.

12. A vehicle (100), in particular a driverless vehicle, comprising a safety apparatus (200) in accordance with any of the preceding claims and a failsafe vehicle control (102) being in communication connection (201) with the safety apparatus (200).

13. A method of safeguarding a vehicle (100), in particular a driverless vehicle,
wherein at least one optoelectronic sensor (10) detects objects in a monitored zone (18) around the vehicle (100) and unpermitted intrusions into a protected field (206) dynamically defined within the monitored zone (18) are recognized as protected field incursions, wherein in the case of a protected field incursion an emergency stop signal or braking signal is output to a vehicle control (102) of the vehicle (100),
**characterized in that** the protected field (206) is defined with reference to an emergency stop trajectory (210) for the vehicle (100) also considering a curve of the emergency stop trajectory (210), wherein the emergency stop trajectory (210) is transmitted from the vehicle control (102) to the protected field determination unit (34) and is that trajectory the vehicle control (102) chooses for the vehicle (100) in case of an emergency stop.

## Revendications

1. Dispositif de sécurité (200) pour un véhicule, en particulier un véhicule sans conducteur, comprenant au moins un capteur optoélectronique (10) pour la détection d'objets dans une zone de surveillance (18), comprenant une unité de détermination de champ de protection (34) pour fixer de manière dynamique un champ de protection (206) à l'intérieur de la zone de surveillance (18), comprenant une unité de surveillance de champ de protection (36) pour reconnaître des interventions inadmissibles dans le champ de protection (106) à titre de violations de protection, et comprenant une sortie de sécurité (32) pour délivrer un signal d'arrêt d'urgence ou un signal de freinage à une commande (100) du véhicule (100) dans le cas d'une violation d'un champ de protection,
**caractérisé en ce que**
l'unité de détermination de champ de protection (34) est réalisée pour fixer le champ de protection (206) au moyen d'une trajectoire d'arrêt d'urgence (210) et pour tenir compte alors également d'une courbe de la trajectoire d'arrêt d'urgence (210), et **en ce qu'**il est prévu une liaison de communication (201) entre la commande (100) du véhicule et l'unité de détermination de champ de protection (34), afin de transmettre la trajectoire d'un arrêt d'urgence (210) depuis la commande (100) du véhicule jusqu'à l'unité de détermination de champ de protection (34), dans lequel la trajectoire d'arrêt d'urgence (210) est la voie de déplacement que choisit la commande (100) du véhicule dans le cas d'un freinage d'urgence pour le véhicule (100).

2. Dispositif de sécurité (200) selon la revendication 1,
dans lequel la liaison de communication (201) est une liaison de communication sécurisée.

3. Dispositif de sécurité (200) selon la revendication 1 ou 2,
dans lequel l'unité de détermination de champ de protection (34) est réalisée pour recevoir une trajectoire d'arrêt d'urgence (210) transmise depuis la commande (100) du véhicule, sous la forme d'une suite discrète de mouvements élémentaires.

4. Dispositif de sécurité (200) selon la revendication 3,
dans lequel les mouvements élémentaires comportent un arc et/ou un morceau de droite.

5. Dispositif de sécurité (200) selon la revendication 3 ou 4,
dans lequel un champ de protection élémentaire (208a-c) pour chaque mouvement élémentaire est déposé dans l'unité de détermination de champ de protection (34), dans lequel le champ de protection élémentaire sécurise respectivement le pas de déplacement du déplacement élémentaire associé.

6. Dispositif de sécurité (200) selon la revendication 5,
dans lequel l'unité de détermination de champ de protection (34) est réalisée pour fixer le champ de protection (206) comme une superposition des champs de protection élémentaires (208a-c) de la suite discrète de mouvements élémentaires pour donner la trajectoire d'arrêt d'urgence (210).

7. Dispositif de sécurité (200) selon la revendication 5 ou 6,
dans lequel l'unité de détermination de champ de protection (34) est réalisée pour déterminer une enveloppante pour une superposition des champs de protection élémentaires (208a-c) de la suite discrète de mouvements élémentaires pour donner la trajectoire d'arrêt d'urgence (210) à titre de champ de protection (206).

8. Dispositif de sécurité (200) selon la revendication 5,
dans lequel une pluralité de champs de protection prédéterminés sont déposés dans l'unité de détermination de champ de protection (34), et l'unité de détermination de champ de protection (34) choisit, pour la détermination dynamique du champ de protection (106), un champ de protection et en particulier le plus petit des champs de protection déposés, lequel contient tous les champs de protection élémentaires (208a-c) de la suite discrète de mouvements élémentaires pour donner la trajectoire d'arrêt d'urgence (210).

9. Dispositif de sécurité (200) selon l'une des revendications précédentes,
qui comprend plusieurs capteurs optoélectroniques (10a-c) mis en concordance les uns par rapport aux autres pour l'élargissement de leurs zones de vision.

10. Dispositif de sécurité (200) selon l'une des revendications précédentes,
dans lequel l'unité de détermination de champ de protection (34) et/ou l'unité de surveillance de champ de protection (36) est intégrée dans le capteur optoélectronique (10).

11. Dispositif de sécurité (200) selon l'une des revendications précédentes, dans lequel le capteur optoélectronique (10) est un scanner à laser ou une caméra 3D.

12. Véhicule (100), en particulier véhicule sans conducteur, comprenant un dispositif de sécurité (200) selon l'une des revendications précédentes, et une commande de véhicule (102) à l'épreuve des erreurs, qui est en liaison de communication (201) avec le dispositif de sécurité (200).

13. Procédé pour sécuriser un véhicule (100), en particulier un véhicule sans conducteur, dans lequel au moins un capteur optoélectronique (10) détecte des objets dans une zone de surveillance (18) autour du véhicule (100) et on reconnaît des interventions inadmissibles dans un champ de protection (206) fixé de manière dynamique à l'intérieur de la zone de surveillance (18), à titre de violations du champ de protection, dans lequel on délivre un signal d'arrêt d'urgence ou un signal de freinage à une commande (102) du véhicule (100) dans le cas d'une violation du champ de protection,
**caractérisé en ce que**
le champ de protection (206) est fixé au moyen d'une trajectoire d'arrêt d'urgence (210) pour le véhicule (100) en tenant également compte d'une courbe de la trajectoire d'arrêt d'urgence (210), ladite trajectoire d'arrêt d'urgence (210) est transmise de la commande (102) du véhicule vers l'unité de détermination de champ de protection (34), et la voie de déplacement est celle que la commande (102) du véhicule choisit dans le cas d'un freinage d'urgence pour le véhicule (100).
